(19) Europäisches Patentamt
European Patent Office
Office européen des brevets

(11) **EP 3 933 448 B1**

(12) **EUROPEAN PATENT SPECIFICATION**

(45) Date of publication and mention of the grant of the patent:
**23.04.2025 Bulletin 2025/17**

(21) Application number: **20305731.0**

(22) Date of filing: **30.06.2020**

(51) International Patent Classification (IPC):
***G01T 1/26*** *(2006.01)*

(52) Cooperative Patent Classification (CPC):
**G01T 1/26**

(54) **DIAMOND-BASED SENSOR COMPRISING MICRO-SENSITIVE VOLUMES**

DIAMANTBASIERTER SENSOR MIT MIKROEMPFINDLICHEN VOLUMINA

CAPTEUR À BASE DE DIAMANT COMPRENANT DES VOLUMES MICRO-SENSIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.01.2022 Bulletin 2022/01**

(73) Proprietor: **Commissariat à l'Energie Atomique et aux Energies Alternatives**
**75015 Paris (FR)**

(72) Inventors:
• **ZAHRADNIK, IZABELLA**
**91191 GIF SUR YVETTE CEDEX (FR)**
• **POMORSKI, MICHAL**
**91140 Villebon sur Yvette (FR)**

(74) Representative: **Cabinet Nony**
**11 rue Saint-Georges**
**75009 Paris (FR)**

(56) References cited:
**FR-A1- 3 066 831**

• **DAVIS JEREMY A ET AL: "Characterization of an Alternative Diamond Based Microdosimeter Prototype", IEEE TRANSACTIONS ON NUCLEAR SCIENCE, IEEE SERVICE CENTER, NEW YORK, NY, US, vol. 61, no. 6, 1 December 2014 (2014-12-01), pages 3479 - 3484, XP011567590, ISSN: 0018-9499, [retrieved on 20141211], DOI: 10.1109/TNS.2014.2354433**
• **JAMES E VOHRADSKY: "Study in the Feasibility of Silicon and Diamond Microdosimetry use in Boron Neutron Capture Therapy", 8 May 2017 (2017-05-08), XP055753118, Retrieved from the Internet <URL:https://ro.uow.edu.au/cgi/viewcontent.cgi?article=1093&context=theses1> [retrieved on 20201123]**

EP 3 933 448 B1

## Description

### Field of the invention

The present invention relates to a diamond-based sensor intended to carry microdosimetry and/or dosimetry measurements of radiation, in particular of ion beams.

It also relates to methods for manufacturing a sensor according to the invention.

The invention primarily aims at improving the Quality Assurance (QA) and radiobiological optimization of hadron therapy treatment plans. Preferred applications include determining essential input parameters such as the dose-mean lineal energy for the estimation of the relative biological effectiveness of an ion beam in the framework of hadron therapy and assessing the impact of cosmic radiation on a living organism.

### Background of the invention

Currently, most external radiotherapy treatments use photons to irradiate tumors. However, hadron therapy (using protons or carbon ions for example) damages tumor cells more effectively than photon therapy.

Charged particles have an inverse depth-dose distribution in comparison to photons, delivering a dose increasing with penetration depth up to a maximum at the end of the particles path (Bragg peak). This maximizes the dose transmitted to the cancerous area and reduces the dose transmitted to the healthy tissue.

Compared to protons, heavier ions such as carbon ions additionally show an increased Relative Biological Effectiveness (RBE). The RBE is defined as the ratio of the irradiated dose of ions to that of a reference photon energy that would be required to result in the same biological effect for both.

To ensure a safe dose delivery and to fully take advantage of ion therapy, a reliable estimation of the RBE of the ion beams is required. A microdosimetric kinetic model (MKM) may be used to predict the RBE of ion beams, based on microdosimetry, which rely on measurements of stochastic energy-deposition distributions in micro-sensitive volumes comparable in size to a human cell.

In routine clinical proton therapy, a constant RBE value of 1.1 is usually assumed. However, the RBE has been shown to vary with different Linear Energy Transfer (LET) values.

The LET is used to describe the average energy deposited per unit length (in keV/$\mu$m) in an absorber material. Limitations of the LET for precise assessment of the RBE have resulted in the development of a set of measurable stochastic quantities, such as the lineal energy which provides the fundamental basis for microdosimetry.

The lineal energy is used to describe the energy deposited by a single event, namely $\varepsilon$, in a micron-size sensitive volume, or microvolume, along the mean particle track length, $\bar{l}$, which is given by:

$$y = \frac{\varepsilon}{\bar{l}}$$

Several devices such as the tissue equivalent proportional counter (TEPC) or silicon-based semiconductor microdosimeter may be used for the measurement of microdosimetric spectra.

Known TEPC consist of a tissue equivalent plastic sphere in a grounded aluminum shell. The sphere is filled with a tissue equivalent gas to simulate interactions with human tissue. This kind of detectors usually use centimeter-sized sensors, which is much larger than the size of a typical human cell.

Mini-TEPCs have been developed with cylindrical sensitive volumes having sizes of the order of a few tens of millimeters. Recently, different miniaturized tissue-equivalent gas detectors corresponding to operation at a nanometric level down to 35 nm have been developed for microdosimetry applications in radiotherapy.

TEPC detectors have had some success while tested in different therapeutic heavy ion beams but are still being further developed. Currently, to the knowledge of the inventors there is no commercial product and the construction of a mini-TEPC is a demanding operation requiring special knowledge and maintenance during use, e.g. for the supply of gases.

Limitations of TEPCs compared to microdosimetry include the need for high-voltage and for a gas supply system. Further limitations include so-called pulse pile-up problems, as well as a low spatial resolution due to a relatively large size of the sensitive volumes compared to other solid-state microdosimeters (which are in the $\mu$m size range).

Silicon-based microdosimeters, better known as silicon-on-insulator (SOI) microdosimeters, have also been developed over the last 20 years.

The use of SOI microdosimeters in lineal energy measurements offers high spatial resolution and counting rates at low costs. Using the latest generation of silicon-based microdosimeters, a good agreement with the results from the well-established TEPCs was achieved. However, a frequently raised issue is the question of tissue equivalence in the case of silicon (with Z = 14), leading to complex correction factors when compared to other materials such as diamond (Z = 6). Silicon-based sensors are therefore not optimal in this respect. Diamond, with its unique physical properties (e.g. a large-band gap, temperature stability, fast drift velocity and low capacitance), has been identified as a promising candidate material to produce microdosimetry devices.

Recently, significant developments in diamond-based microdosimetry have been made with various fabrication and operational approaches.

In C. Verona et. Al., "Toward the use of single crystal diamond-based detector for ion-beam therapy microdosimetry," Radiation Measurements 110, 25-31 (2018) a diamond-based microdosimeter is disclosed, which includes a multi-layered structure obtained by a two-step diamond growing technique. The fabrication process essentially consists in growing a highly boron-doped diamond layer on a thick High Pressure High Temperature (HPHT) diamond substrate, followed by a thin intrinsic diamond layer and a metal electrode on the top. A Schottky contact is formed between the metal and the intrinsic layer allowing zero bias voltage operation of the device. The metal electrode defines the dimensions of the sensitive volumes.

However, the sensitive volumes need to be connected to a readout channel, which requires the formation of interconnecting metal tracks inactive in terms of signal generation but which generate distorting signals. Furthermore, an incomplete signal coming mostly from the edges of the sensitive area can be observed. This incomplete signal has only little influence on the full Charge Collection Efficiency (CCE) signal for a large sensitive volume with an area of 300x300 $\mu m^2$ as described in the reference cited above. However, this incomplete signal will significantly contribute to the measured signal when the sensitive volumes becomes smaller, e.g. 30x30 $\mu m^2$, as the area with full CCE is also smaller, thus decreasing the accuracy of the measurement.

J. Davis et al., A 3D lateral electrode structure for diamond based microdosimeter, Applied Physics Letter, 110, (2017) discloses a diamond microdosimeter detector featuring a lateral electric field structure, created by using a combination of selective laser ablation and active brazing alloys. The so-called 3D Lateral Electrode Structure is deposited onto an intrinsic single crystal diamond substrate.

However, this design is believed to generate distorted signals also and the detector has not been tested with ion beams to the knowledge of the inventors.

J. Davis et al., Evolution of Diamond based Microdosimetry,Micro-Mini & Nano Dosimetry (MMND) 2018, IOP Conf. Series: Journal of Physics: Conf. Series 1154, (2019) discloses bi/tri-layered diamond structures. A diamond microdosimeter utilizing a combination of laser ablation and active brazing alloys upon a bi-layered structure is proposed. The structure features cylindrical sensitive volumes created by laser ablation and active brazing alloys situated within a thin membrane of electronic grade polycrystal CVD diamond. The microfabrication process is relatively complicated.

I. A. Zahradnik et al., "scCVD diamond membrane based microdosimeter for hadron therapy," Phys. Status Solidi A 215, 1800383 (2018) discloses a so-called "p+sensor" structure consisting of a patterned heavily boron-doped layer (p+), which is used to create active micro-sensitive volumes within the sensor volume.

Due to the formation of local p+-i-m junctions, this sensor is self-biased with an experimentally measured built-in potential of 1.8 V, corresponding to a built-in electric field of 0.45 V/$\mu$m in the 4$\mu$m-thick sensor. This electric field is strong enough to obtain a full Charge Collection Efficiency (CCE) for low LET protons. However, for heavier ions with higher LET (e.g. carbon), incomplete CCE is observed.

I. A. Zahradnik et al., "A diamond guard ring microdosimeter for ion beam therapy, " Rev. Sci. Instrum. 91, 054102 (2020) discloses a guard ring approach, consisting in depositing a patterned metal-based top electrode onto an intrinsic diamond membrane. The patterned top electrode in combination with a pad electrode on the back of the so-called "GR sensor" is used to create active micro-sensitive volumes within a 12$\mu$m-thick membrane. As a result of the biasing of the sensor, a significant increase in the electric field, 2.5 V/$\mu$m and higher is obtained within the micro-sensitive volumes, thereby enabling full CCE to be obtained for various projectiles. Preliminary experiments using clinical beams have demonstrated a very good performance. However, this sensor includes connecting bridges, which are essential for the signal read-out from the micro-sensitive volumes but generate a distorting signal degrading the accuracy of the measurements.

The application FR 3066831 AI discloses a diamond-based detector in which micro-sensitive volumes may be formed by degraded patterns in a diamond layer.

The publication Davis et al., "Characterization of an alternative diamond based microdosimeter prototype ", IEEE Transactions on nuclear science, vol. 61 n. 6, 1 December 2014 relates to a diamond microdosimeter prototype comprising sensitive volumes separated through laser milled trenches.

The thesis Vohradsky et al., "Study in the feasibility of silicon and diamond microdosimetry use in boron neutron capture therapy", 8 May 2017 discloses a 3D Lateral Electrode Structure detector in which radiation-damaged patterns may be used to reduce charge sharing between sensitive volumes.

Therefore, there remains a need for improving existing sensors to remedy to all or part of the deficiencies of the prior art mentioned above, and the invention aims to benefit from a reliable and relatively easy to manufacture sensor allowing accurate microdosimetric measurements.

## Summary

Exemplary embodiments of the invention relate to a sensor according to claim 1, comprising

- a plurality of isolated, single-standing diamond-based micro-sensitive volumes having opposite end faces,
- a layer of a non-electrically active material extending around each micro-sensitive volume of said plurality,
- electrodes electrically connected to said end faces for signal readout.

Thanks to the absence of charge generation from and to insulation provided by the layer of the non-electrically active material surrounding the micro-sensitive volumes, signal distortion as encountered in the prior art and arising for example due to connecting bridges between micro-sensitive volumes is avoided, thus contributing to improve the accuracy of the measurements.

In particular, as there is substantially no charge diffusion from areas surrounding the micro-sensitive volumes and occupied by the non-electrically active material, the sensor may deliver a high spatial resolution response with no or limited low energy tail in pulse-height spectra arising from charge diffusion directed to micro-sensitive volumes from neighboring material. Therefore, a better microdosimetric spectrum quality can be achieved.

The electrodes may easily be connected to a multichannel readout. In particular, an electrode may be easily connected to a respective isolated single micro-sensitive volume, if desirable. When combined with a multichannel readout, the individual reading of the output of each of the micro-sensitive volumes (or sets of micro-sensitive volumes electrically connected together) allows relatively good mapping capabilities, as well as precise measurements in the case of a high rate of incoming particles.

Due to the physical properties of diamond, the sensor according to the invention is also more tissue-equivalent and radiation hard compared to silicon-based sensors.

Non-electrically active material

In the context of the invention, a "non-electrically active material" refers to a material that creates substantially no directional drift of radiation-induced free charge carriers under an electric field. While incident radiation such as an ion beam may create free charge carriers in the non-electrically active material, the lifetime of the free charge carriers in the non-electrically active material is very short, e.g. on the order of a picosecond.

As a result, under typical conditions, e.g. under electric fields of 0-100 V/$\mu$m, no measurable signal is generated in the non-electrically active material.

Examples of suitable non-electrically active materials include radiation hard resists such as epoxy-based resins (e.g. SU-8), polymers such as PMMA, and some inorganic materials such as glass.

The non-electrically active material may have a planar configuration and/or be of a substantially constant thickness, preferably having a same thickness as the micro-sensitive volumes.

The non-electrically active material preferably extends in contact with and around the entire periphery of each one of the micro-sensitive volumes.

Preferably, the non-electrically active material fills all the space between the micro-sensitive volumes, leaving no voids between them.

The non-electrically active material may be rigid or flexible.

The micro-sensitive volumes may be mechanically supported by the non-electrically active material, and the latter may be supported only at its periphery by a frame, preferably a diamond-based frame made of a same material as the micro-sensitive volumes.

The non-electrically active material may support metal electrodes that covers both the micro-sensitive volumes and the non-electrically active material.

The non-electrically active material may support a doped layer or cover a doped layer, as detailed below.

The non-electrically active material may be superposed entirely to a substrate, for example a HPHT (High Pressure High Temperature) or CVD diamond substrate.

The non-electrically substrate may support conductive tracks extending along its thickness.

Sensor structure

According to some embodiments, the sensor comprises a diamond-based frame supporting said non-electrically active layer, preferably an intrinsic diamond layer, more preferably an intrinsic CVD diamond layer.

The diamond-based frame may for instance be U-shaped when seen in a direction orthogonal to the plane of the non-electrically active layer.

Preferably, the sensor comprises electrode bonding pads in contact with said frame.

The bonding pads are advantageously arranged on another part than the resist layer. Due to the possibly flexible nature of the resist layer, bonding pads arranged on the resist may be damaged. By contrast, performing micro-bonding on diamond provides improved reliability. Furthermore, the bonding pads are preferably arranged as far as possible from the back electrode in order to minimize the electric field at the bonding pads' location and to prevent undesired collection of charges.

Preferably, the sensor comprises a common electrode extending over end faces which are on a side of the non-electrically active layer adjacent the diamond-based frame.

This common electrode, arranged on the bottom side of the sensor, may be kept at a ground potential or at some biasing voltage provided by an external source.

According to some embodiments, the sensor comprises a diamond-based substrate over which the plurality of micro-sensitive volumes extends.

Preferably, the sensor comprises a p, p+, n or n+ doped diamond layer. This layer is in contact with end faces of the plurality of micro-sensitive volumes, on one side thereof.

The doped layer may extend over the end faces that are adjacent the diamond-based frame. The doped layer may extend between the plurality of micro-sensitive volumes and the diamond-based substrate and over said substrate on a first area thereof, electrode bonding pads being located respectively on said doped layer over said first area and on the substrate over a second area thereof opposite the first one with respect to the micro-sensitive volumes. Preferably, the p, p+ doped layer is a boron doped layer and the n, n+ doped layer is a phosphorus doped layer, but other dopants may be used.

The doped layer provides a self-biasing of the micro-sensitive volumes, thus creating a built-in potential. The built-in potential of the sensor according to the invention may be strong enough to obtain a full charge collection efficiency (CCE) in the case of a proton beam. Thus, external biasing voltage may not be needed for measurements in proton therapy. However, for heavier ions (e.g. carbon, oxygen, silicon, or neon) an external bias may be applied to create a stronger electric field, thus resulting in a full CCE for a wide range of energies and ions.

Additionally, the doped layer may provide an additional mechanical support for the micro-sensitive volumes.

In a preferred embodiment, the diamond-based micro-sensitive volumes are made of intrinsic diamond, preferably single crystal diamond, more preferably CVD (chemical vapor deposition) diamond.

According to a preferred embodiment, the micro-sensitive volumes have a thickness in a direction perpendicular to a plane defined by the non-electrically active layer comprised between 0.1 $\mu$m and 500 $\mu$m, preferably between 1 $\mu$m and 50 $\mu$m, even more preferably between 1 $\mu$m and 20 $\mu$m.

The micro-sensitive volumes preferably have a shape that has a symmetry of revolution.

The micro-sensitive volumes may have a cylindrical shape with an axis perpendicular to said plane and with a diameter comprised between 0.5 $\mu$m and 500 $\mu$m, preferably between 1 $\mu$m and 100 $\mu$m, even more preferably between 10 $\mu$m and 100 $\mu$m.

In some variant embodiments, the micro-sensitive volumes have a spherical or half-spherical shape with a diameter comprised between 0.5 $\mu$m and 500 $\mu$m, preferably between 1 $\mu$m and 100 $\mu$m, even more preferably between 10 $\mu$m and 100 $\mu$m. A spherical or half-spherical shape may improve accuracy of the measurement when incoming radiation is not oriented in a particular direction. However, in hadron therapy a cylindrical shape is appropriate as the sensor may be oriented so that the axis of the micro-sensitive volume may be substantially aligned with the incoming direction of the ion beam.

The diameter-to-thickness ratio for the micro-sensitive volumes may range from 1:2 to 5:1, and is preferably of about 2:1. When the cross-section of the micro-sensitive volume is not circular, the diameter corresponds to the one of the circumscribed circle.

Preferably all the micro-sensitive volumes have a same shape, but in some variants the sensor comprises at least two micro-sensitive volumes with different shapes.

All micro-sensitive volumes may have a same thickness. However, at least two micro-sensitive volumes may have different thicknesses. The two different thicknesses may differ from each other by at least 10%, or more, for example by at least 30 or 50%.

Micro-sensitive volumes of different thicknesses may have a same diameter or a different diameter, preferably a same diameter.

Micro-sensitive volumes having a same thickness may have a same diameter or a different diameter, preferably a same diameter.

Micro-sensitive volumes of different thicknesses allow to vary the sensitivity to energy deposition which may prove useful when the LET of the ion beam varies along the treatment path. At the entrance of the treatment path, far from the Bragg peak, the LET may be very small (e.g. a few keV/$\mu$m) whereas around the Bragg peak maximum it may reach up to 150 keV/$\mu$m. Micro-sensitive volumes of larger thicknesses may thus provide a stronger signal than those of smaller thickness thus improving the signal/noise ratio. Shorter micro-sensitive volumes provide however better spatial accuracy near the Bragg peak, due to their reduced thickness, and their lower sensibility is compensated by the stronger energy deposition near the Bragg peak.

The sensor preferably comprises an array of micro-sensitive volumes.

The volume of one micro-sensitive volume may range from 1 to 1000000 $\mu$m$^3$, preferably from 1 to 5000 $\mu$m$^3$, more preferably from 1 to 2500 $\mu$m$^3$.

A top electrode connected to a readout channel may interconnect several micro-sensitive volumes of an array of micro-sensitive volumes of the sensor. The number of interconnected micro-sensitive volumes may range from 1 to 10000.

The number of micro-sensitive volumes of the sensor may range from 1 to 10000.

Methods of microfabrication of the sensor

The sensor of the invention can be manufactured according to the various methods defined below, depending its structure as defined above.

One method according to claim 13 of manufacturing the sensor of the invention relates to a method for manufacturing a sensor, comprising:

- formation of a diamond-based membrane,
- formation a doped diamond layer on a bottom side of the diamond-based membrane,
- formation of diamond-based micro-sensitive volumes supported by the doped diamond layer by selective etching of the membrane over the entirety of its thickness,
- deposition of a layer of non-electrically active material around the micro-sensitive volumes.

Another method according to claim 14 of manufacturing the sensor of the invention relates to a method for manufacturing a sensor, comprising:

- formation of a diamond-based membrane,
- formation of diamond-based micro-protrusions supported by a residual layer of the membrane by selective etching of the membrane over a part of its thickness,
- deposition of a layer of non-electrically active material around the micro-protrusions on the residual layer,
- removing the residual layer by etching said residual layer to form the micro-sensitive volumes supported by the layer of non-electrically active material.

A further method according to claim 15 of manufacturing the sensor of the invention relates to method for manufacturing a sensor, comprising:

- formation of a doped diamond layer over a substrate,
- formation of a diamond-based layer over the doped layer,
- formation of diamond based micro-sensitive volumes over the doped layer by selective etching of the diamond-based layer over the entirety of its thickness,
- optionally, selective etching of the doped layer to leave an exposed region on the substrate on one side of the micro-sensitive volumes,
- deposition of a layer of non-electrically active material around the micro-sensitive volumes.

All these microfabrication methods are relatively easy to implement and to manufacture the sensor in a reliable manner at a relatively low cost. They may allow the fabrication of micro-sensitive volumes of different sizes independently of the currently available scCVD diamond plates.

Use

The sensor may be used in hadron therapy, in particular with Pencil Beam Scanning (PBS) ion beams and with passive scattering delivery techniques such as Double Scattering (DS).

The sensor may also be used for monitoring exposition to space radiation, for example during missions to the moon or Mars.

**Brief description of the figures**

In the drawings:

Fig.1 is a schematic view in perspective of a first exemplary embodiment of a sensor made in accordance with the invention,
Fig.2 is a cross section of the sensor of Fig.1,
Fig.3 is a diagram illustrating the electrical bias introduced by the presence of the doped layer,
Fig.4A to 4L illustrate an example of a method for producing the sensor of Fig.1,
Fig.5 is a view analogous to Fig.1 of a variant embodiment of the sensor,
Fig.6 is a cross section analogous to Fig.2 of the variant of Fig.5,
Fig.7 is a view analogous to Fig.3 of the variant of Fig.5,
Fig.8A to Fig.8F illustrate an example of a method for producing the sensor of Fig.5,
Fig.9 is a view analogous to Fig.1 of a further variant embodiment of the sensor,
Fig. 10 is a cross section of the sensor of Fig.9,
Fig.11 is a view analogous to Fig.3 of the embodiment of Fig.9,
Fig.12A to 12L illustrate an example of a method for producing the sensor of Fig.9.
Fig.13 is a cross section view of a further embodiment of the sensor.
Fig. 14 is an image representing the response of a sensor according to the invention to an ion beam.

**Detailed description**

The terms "top" and "back" refer to one orientation of the sensor on the drawings. The sensor may be used in any appropriate orientation with respect to the incident radiation, and the top electrode may or may not be facing the incident radiation.

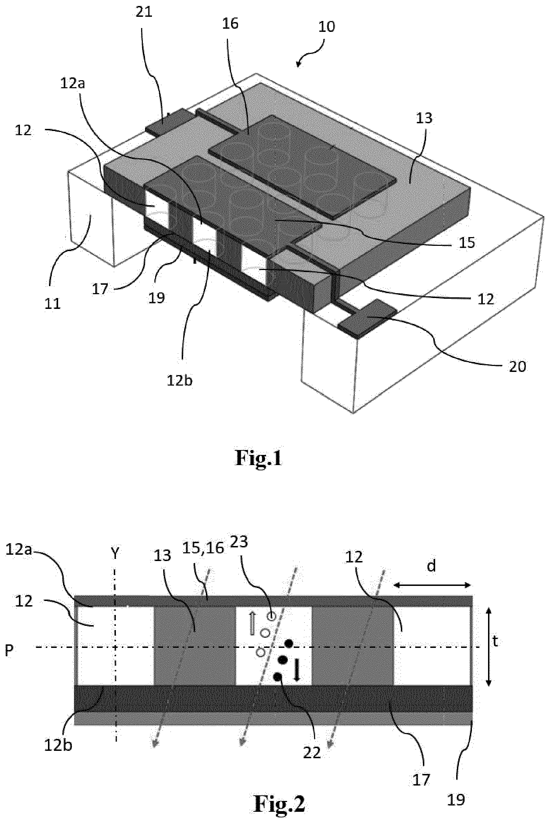

Referring to Fig.1, there is shown a first embodiment of a micro-dosimeter sensor 10 according to the invention.

The sensor 10 comprises an intrinsic (i.e. undoped) CVD diamond frame 11. The latter supports on its top side a layer 13 of a non-electrically active material. The layer 13 is made for example of an epoxy-based resist, for example SU-8.

Micro-sensitive volumes 12 (also referred to as $\mu$SVs) are embedded in the non-electrically active layer 13, while having their end faces on the bottom side and on the top side exposed. The $\mu$SVs 12 are separated from one another by the material of the layer 13.

In the embodiment shown in Figure 1, the $\mu$SVs 12 are cylindrical in shape, with their axis oriented perpendicularly to the plane along which the layer 13 extends. They may have a diameter comprised between 10 $\mu$m and 100 $\mu$m, but their size and shape may vary.

The layer 13 is not electrically active, meaning that the incoming ions do not generate directional drift of free charge carriers therein.

The layer 13 contributes to the mechanical stability of the $\mu$SVs 12.

In the example shown, all the μSVs 12 have a same thickness, but their thickness may vary as will be described in reference to a further embodiment.

The μSVs 12 and the layer 13 may be 1 μm to 100 μm thick, depending in particular on the dosimetry needs for the sensor.

The μSVs 12 are preferably made of single crystal CVD intrinsic diamond.

Top electrodes (only two of them being apparent in the figures) are arranged on the top side of the layer 13, each of the top electrodes being in electrical contact with end faces of a respective subset of μSVs 12.

In the Figure 1, two arrays of μSVs 12 are shown to be connected to respective top electrodes 15 and 16. For each array, the corresponding μSVs 12 are interconnected by the respective top electrode 15 or 16.

The top electrodes are made of any appropriate electrically conducive material and may be metal-based, for example aluminum-based, or carbon-based.

Bonding pads are arranged on the frame 11 and are electrically connected to the top electrodes. In Figure 1, two bonding pads 20, 21 are shown, respectively connected to top electrodes 15 and 16. The bonding pads 20, 21 are connected to readout electronics by any appropriate wiring (not shown).

A doped diamond layer 17 is arranged on the bottom side of the non-electrically active layer 13 and is in electrical contact with the bottom end faces of the μSVs 12.

The doped layer 17 may be a boron-doped p+ diamond layer. It may have a thickness comprised between 1 μm and 5 μm.

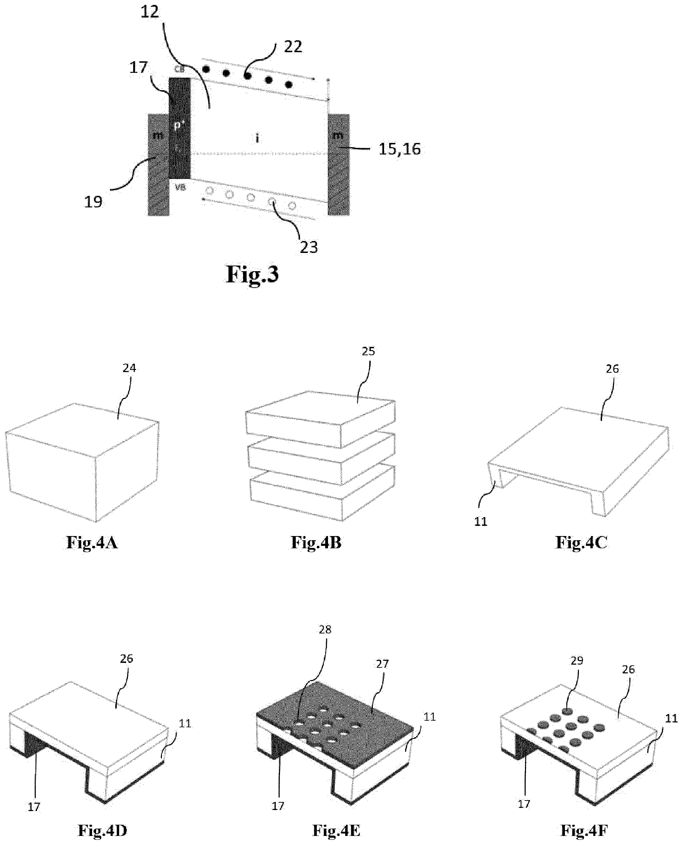

The doped layer 17 provides additional mechanical support to the μSVs 12 in addition to self-biasing the μSVs 12 as illustrated in Figure 3.

With a boron p+ doped layer 17, intrinsic scCVD diamond μSVs 12, and aluminum top electrodes 15, 16, the built-in potential may be above 1V, for example of about 1.8 V.

A bottom electrode 19 is arranged on the bottom side of the doped layer 17. This bottom electrode 19 may be metal-based, for instance aluminum-based, and may be electrically connected to the electrical ground.

When the sensor 10 is irradiated by incident radiation, ionizing particles may interact with the μSVs 12 as illustrated in Figure 2. When an ionization event inside one of the μSVs 12 occurs, an electrical signal is generated, which may be processed by the readout electronics to provide micro-dosimetric or dose rate measurement.

In the embodiment of Figures 1 to 3, the built-in potential is strong enough to obtain a full charge collection efficiency (CCE) in the case of a proton beam. Thus, no external biasing is needed for measurements in proton therapy in this configuration.

However, for heavier ions (e.g. carbon, oxygen or neon) a stronger electric field is needed. An external bias from a voltage source may then be applied to the electrodes, thus resulting in a full CCE for a wide range of energies and ions.

Despite the external bias applied to the μSVs 12, no charge transport takes place in the layer 13. Thus, no signal distortion is induced by charge diffusion from the layer 13 into the μSVs 12.

Figures 4A to 4L illustrate successive microfabrication steps for manufacturing the sensor of Figures 1 to 3.

Firstly, a diamond plate 24 is provided (Figure 4A). The diamond plate is preferably between 300 and 1000 μm thick and may be made of single crystal chemical vapor deposition (scCVD) raw synthetic diamond.

As shown in Figure 4B, the diamond plate 24 is then sliced in thin plates 25 with a preferred thickness of 20 μm to 60 μm, and polished. The surface area of the thin plates may be comprised between 3x3 mm$^2$ and 1x1 cm$^2$.

Next, the thin plate 25 is etched to create an ultra-thin membrane 26 with a thickness smaller than or equal to 20 μm, suspended over a bulky frame 11 (Figure 4C). The ultra-thin membrane 26 may have the same surface area as the original thin plate. The bulky frame 11 may be U-shaped when viewed in a direction orthogonal to the plane of the membrane.

In order to obtain the ultra-thin membrane 26, a deep Ar/O$_2$ plasma etching is used, following the method described e.g. in M. Pomorski et al., "Super-thin single crystal diamond membrane radiation detectors, " Appl. Phys. Lett. 103, 112106 (2013).

The ultra-thin diamond membrane 26 is advantageously cleaned with hydrofluoric acid and a hot acid treatment in order to eliminate possible surface contamination.

As shown in Figure 4D, a thin and heavily doped diamond layer 17 is grown on a bottom side of the diamond membrane 26 and of the frame 11. The diamond layer 17 is advantageously p+ boron-doped and may be 1 μm to 5 μm thick.

The doped layer 17 is produced via chemical vapor deposition (CVD).

Preferably, prior to further processing, a hot acid cleaning treatment is applied on the sample to remove possible surface contamination.

Optionally, the sample is fixed onto a silicon wafer in order to achieve a better structural stability for the following processing steps. To do so, a thin layer of photoresist is spin coated on the silicon wafer and the sample placed on it with its top side facing up, i.e. with the doped layer 17 facing the silicon wafer. The photoresist is then hardened by soft baking for a few minutes, for instance at a temperature of 100 °C.

In the next step, as shown in Figure 4E, a positive epoxy-based resist 27 is deposited on the diamond membrane. Photolithographic patterning is then performed using UV light. In other words, only specific areas of the resist layer 27 are exposed to the UV light, such that the resist from these specific areas may be removed. This creates empty volumes 28 that allow a direct access to the diamond membrane 26 through the resist layer 27.

Next, a layer of chromium (Cr) which may be 200 $\mu$m to 600 $\mu$m thick is deposited onto the top side of the diamond membrane 26. The sample is then gently rinsed with acetone in order to detach the residual photoresist layer (lift-off technique). A metallic Cr mask 29 on the diamond membrane 26 is thus obtained (Figure 4F).

A wet etch approach may also be used to obtain the Cr mask 29.

Acetone rinsing is used to remove the sample from the silicon wafer.

The sample is then rinsed with isopropanol and blow-dried.

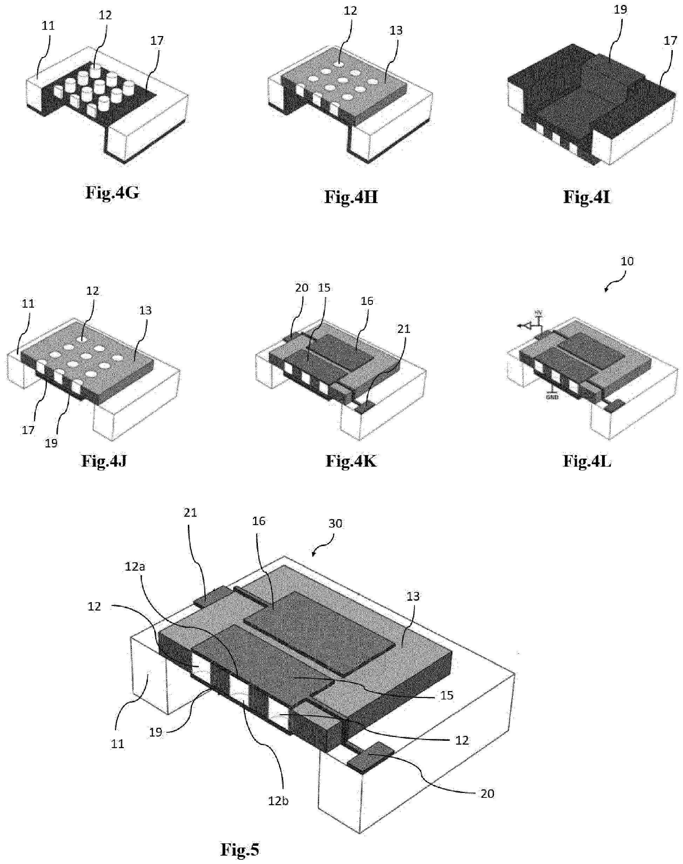

In a further processing step, depicted in Figure 4G, single-standing micro-sensitive volumes ($\mu$SVs) 12 are created within the diamond membrane 26.

To that end, Ar/O$_2$ reactive ion etching (RIE) is used. Due to the higher etching selectivity for diamond compared with the Cr mask 29, micro-sized volumes of diamond are etched beneath the metal mask, down to the doped layer 17, thus forming isolated $\mu$SVs 12 in the diamond membrane 26.

The diamond membrane 26 in between the $\mu$SVs 12 is completely etched.

Before further processing, a chromium etchant followed by a hot acid cleaning treatment is applied to the etched membrane in order to remove the residual Cr mask and possible surface contamination. The etched membrane is also rinsed with isopropanol and blow-dried.

Preferably, the sample is then again fixed on a silicon wafer as previously described.

Ar plasma may be used to ensure that the surface of the membrane is clean from any organic contamination.

As shown in Figure 4H, a layer 13 of non-electrically active material is then spin coated between the $\mu$SVs 12. The layer 13 may be made of SU-8 photoresist.

To limit the layer 13 to regions closely surrounding the $\mu$SVs 12, photolithography may be used in the same way as described with reference to Figure 4E.

Should the sample be attached to a silicon wafer with photoresist, the photoresist is then dissolved with acetone.

Next, the layer 13 is hard baked, for instance at a temperature of 120 °C, to cure the resist 13. The layer 13 subsequently becomes solid and impossible to dissolve in acetone.

Once the layer 13 is cured, photolithography cannot be used anymore to modify its shape or to remove it. Therefore, shallow Ar/O2 plasma etching is used to remove the resist layer 13 which may lie on top of the end faces of the $\mu$SVs 12.

As shown in Figure 4I and 4J, the next step consists in depositing a strip of Cr layer 19 onto the back side of the sample. The Cr layer 19 acts as a mask to protect the underlying doped layer during the next etching step, where the portion of the doped layer 17 outside the masked area is etched from the frame 11 to obtain the structure of Figure 4J.

Etching the doped layer prevents the formation of local p+-intrinsic diamond junction and thus the creation and collection of charge from the bonding pads and the connection tracks.

The Cr layer 19 additionally acts as a strip pad back electrode for the diamond sensor after plasma etching.

Next, one or several electrical contacts 15, 16 are deposited on the top side of the sample (Figure 4K). The contacts 15, 16 may be metal- or carbon-based as mentioned above.

To this end, the sample may be fixed on a silicon wafer following the procedure described previously. To create multiple patterned electrodes 15, 16, covering only the area closest to the $\mu$SVs 12, a standard resist is spin coated onto the sample. Using photolithography, resist patterns can be created which will define the top electrical contacts 15, 16 and the bonding pads 20, 21.

In the case of metal-based electrodes, a wet etch technique may be applied: using a specific metal etchant, all metallization except the regions covered by the resist is removed. In the case of carbon-based electrodes, a lift-off technique may be used instead.

The sample is then gently rinsed with acetone to remove the resist patterns from the newly created electrodes and to remove the sample from the silicon wafer.

The processed sample is then rinsed with isopropanol and blow-dried.

The resulting sensor 10 is then ready for mounting onto an appropriate sensor carrier and for wire bonding (Figure 4L).

Turning to Figures 5 to 7, a second embodiment of a sensor 30 according to the invention is described.

The sensor 30 of Figure 5 differs from that of Figures 1 to 3 by the absence of the doped layer 17, the bottom electrode 19 being directly in contact with the bottom end face of the $\mu$SVs 12 and the bottom face of the layer 13.

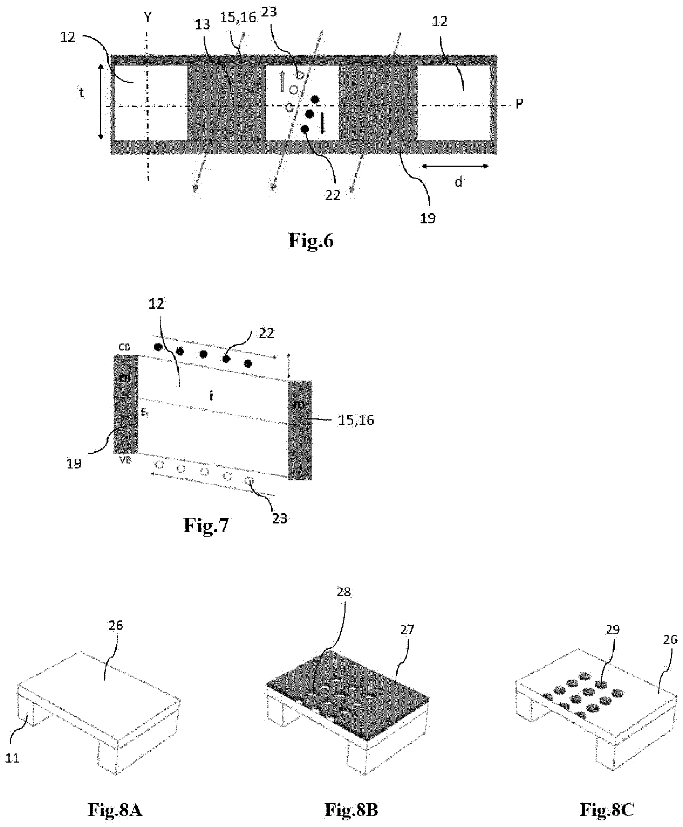

When the micro-dosimeter sensor 30 of Figure 5 is irradiated with an ion beam, ionizing particles may interact with a $\mu$SV 12 as illustrated in Figure 6 and excess charge carriers' electrons and holes 22, 23 are generated and start to drift in the presence of an externally generated electric field as illustrated in Figure 7.

Figures 8A to 8I illustrate successive steps of a manufacturing method to obtain the sensor 30.

Firstly, the preliminary steps previously described with reference to Figures 4A to 4C may be carried out in order to obtain a thin intrinsic diamond membrane 26 suspended over an intrinsic diamond frame 11, as shown in Figure 8A.

Figures 8B and 8C illustrate processing steps identical to the processing steps already described with reference to Figures 4E and 4F.

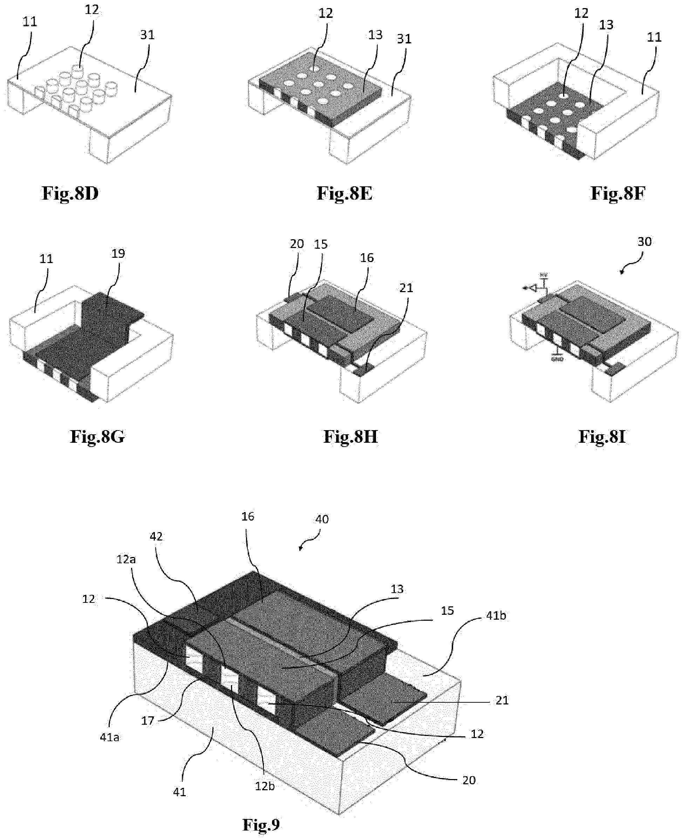

Next, as shown in Figure 8D, Ar/O$_2$ reactive ion

etching is carried out to create the single-standing micro-sensitive volumes 12 within the diamond membrane 26, similarly to the processing step described with reference to Figure 4G. However, in the present case, the diamond membrane 26 is not fully etched through: a residual layer 31 of intrinsic diamond, which may be approximately 5 $\mu$m thick, is left as a layer supporting the $\mu$SVs 12.

A chromium etchant followed by a gentle hot acid cleaning treatment may then be applied to the etched membrane, in order to remove the residual Cr-mask and possible surface contamination of the sample. Isopropanol rinsing and blow-drying may be carried out. Additionally, Ar plasma may be used to ensure that the surface of the sample is clean from any organic contamination before further processing.

Next, a layer 13 of non-electrically active material is spin coated onto the supporting layer 31 as illustrated in Figure 8E. This step is carried out in the same way as detailed above with reference to Figure 4H.

The following step, depicted in Figure 8F, consists in removing the residual diamond layer 31 from the bottom side of the non-electrically active layer 13. To do so, Ar/O$_2$ reactive ion etching may be used.

Then, as shown in Figure 8G, the bottom electrode 19 which may be metal-based, preferably aluminum-based, is deposited on the bottom side of the layer 13 and of the $\mu$SVs 12. The electrode 19 acts as a full pad back electrode for the sensor and provides improved stability. Finally, as shown in Figure 8H, top electrodes on the top side of the layer 13 and of the $\mu$SVs 12 are deposited, following the method described with reference to Figure 4K.

The sensor 30 is then ready for mounting onto an appropriate sensor carrier and for wire-bonding, as illustrated in Figure 8I.

Turning to Figures 9 to 11, a third embodiment of a sensor 40 according to the invention is described.

Referring to Figure 9, the sensor 40 comprises an intrinsic (i.e. undoped) thick diamond bulk substrate 41. The substrate 41 may be 300 $\mu$m to 1000 $\mu$m thick and supports on its top side a doped diamond layer 17 and a non-electrically active layer 13.

The main purpose of the diamond bulk substrate 41 is the mechanical stabilization of the sensor. The substrate 41 has no impact on the measured microdosimetric spectra.

Micro-sensitive volumes 12 are embedded in the layer 13, while leaving their end faces on the bottom side and on the top side exposed. As in the previous embodiments, the $\mu$SVs 12 are separated from one another by the material of the layer 13.

In the embodiment shown in Figure 9, the $\mu$SVs 12 are cylindrical in shape. As for the sensors 10 and 30, the $\mu$SVs 12 are preferably made of single crystal CVD intrinsic diamond. The doped diamond layer 17 may be a p+ boron-doped layer, with a thickness comprised between 0.2 $\mu$m and 3 $\mu$m.

The bulk substrate 41 may be a HPHT (High Pressure High Temperature) diamond due to its low cost. It may also be CVD grown diamond, for example heteroepitaxial diamond grown by CVD on iridium.

On the bottom side, the end faces of the $\mu$SVs 12 are in electrical contact with the doped layer 17. Thus, the latter may serve as a bottom electrode for the $\mu$SVs 12. The doped layer 17 also allows self-biasing of the $\mu$SVs 12.

A common contact pad 42 which may be carbon- or metal-based lies on top the doped layer 17 aside the $\mu$SVs 12 and may be kept at a given potential, for example ground potential. On the top side, the end faces of the $\mu$SVs 12 are in electrical contact with top electrodes, only two of them, referred to as 15 and 16 being shown. These top electrodes are in electrical contact with end faces of a respective subsets of $\mu$SVs 12.

As in previous embodiments, the $\mu$SVs 12 of each array are interconnected by a respective top electrode.

Bonding pads 20, 21 are electrically connected to the top electrodes 15, 16. The bonding pads 20, 21 are connected to readout electronics by any appropriate wiring (not shown).

The bonding pads are deposited directly on the diamond substrate 41 rather than on the non-electrically active layer 13.

In the example shown, the bonding pads lie opposite to the contact pad 42 with respect to the $\mu$SVs 12.

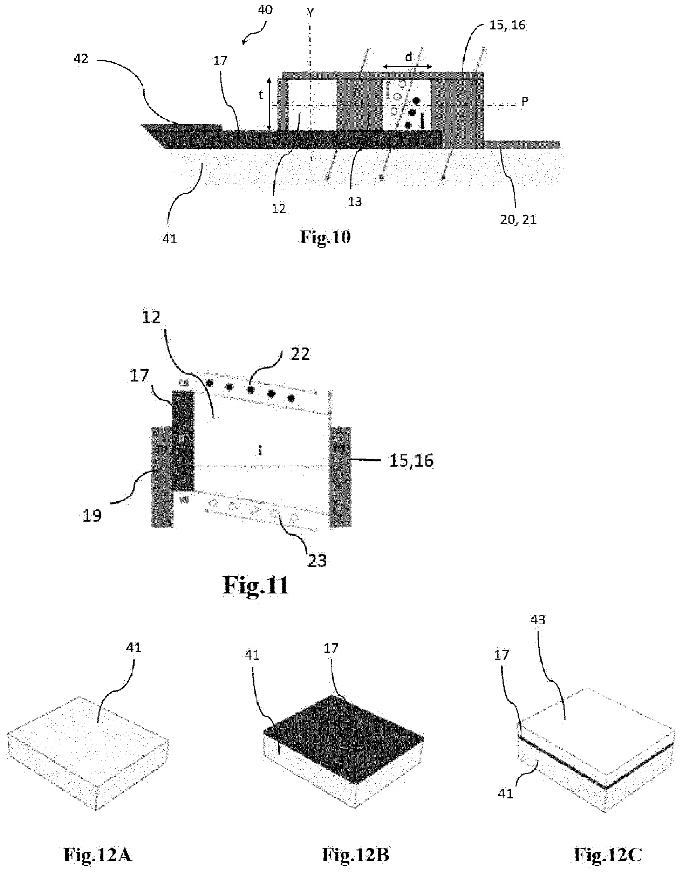

When the micro-dosimeter sensor 40 of Figure 9 is irradiated with an ion beam, ionizing particles may interact with a $\mu$SV 12 as illustrated in Figure 10 and excess charge carriers' electrons and holes 22, 23 are generated and start to drift in the presence of a built-in electric field as illustrated in Figure 11.

As described with reference to the embodiment of Figure 11, the built-in potential may be strong enough to obtain a full charge collection efficiency (CCE) in the case of a proton beam. An external bias may also be applied to obtain a stronger electric field.

Turning to Figures 12A to 12L, a method for manufacturing the sensor 40 is described.

Firstly, a diamond bulk substrate 41 is provided (Figure 12A). The substrate 41 may be a CVD grown diamond plate or HPHT diamond plates. The substrate 41 may be 300 $\mu$m to 1000 $\mu$m thick.

A thin and heavily doped diamond layer 17 is then grown on the top side of substrate 41 as shown in Figure 12B via CVD. The layer 17 may be 0.2 $\mu$m to 3 $\mu$m thick and may be p+ boron-doped.

Prior to further processing, a hot acid cleaning treatment may be used to remove possible surface contamination.

As shown in Figure 12C, a layer 43 of intrinsic diamond is then grown via CVD on the top side of the doped layer 17.

The obtained multi-layer sample may then be cleaned using a hot acid treatment to remove possible surface contamination. In order to improve its stability, it may also be fixed on a silicon wafer following the method described previously.

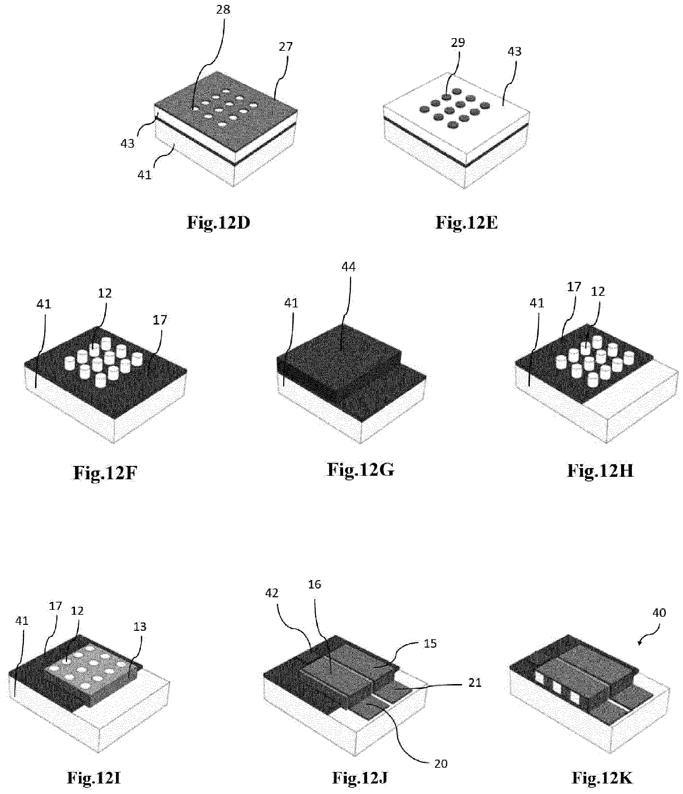

As shown in Figure 12D, a resist layer 27 is subsequently deposited on the diamond layer 43 and photolithographic patterning is performed as described with reference to Figures 4E and 8B.

As described with reference to Figures 4F and 8C, a 200 $\mu$m to 600 $\mu$m thick layer of Cr is then deposited and the layer 27 is removed to create a metallic hard mask on the layer 43 as shown in Figure 12E.

Next, as described with reference to Figure 4G, Ar/O$_2$ reactive ion etching is used to form the $\mu$SVs 12 in the diamond layer 43 as shown in Figure 12F. The diamond layer 43 is etched over the entirety of its thickness, i.e. down to the doped layer 17.

Before further processing, a chromium etchant followed by a hot acid cleaning treatment may be applied to the etched sample in order to remove the residual Cr mask and possible surface contamination. Isopropanol rinsing and blow-drying may follow.

Next, to remove the doped layer 17 from a region of the diamond substrate 41 and thus define the shape of the doped electrode, a polycrystal CVD diamond layer is used as a shadow mask 44 as shown in Figure 12G. To this end, the shadow mask 44 is arranged on the sample without attaching it to the sample.

Ar/O$_2$ reactive ion etching is then used to remove the area of the doped layer 17 uncovered by the mask 44 (Figure 12H).

Alternatively, the shape of the doped electrode may be defined by growing the doped layer 17 only on selected areas of the diamond substrate 41.

Before further processing, a hot acid cleaning treatment may be applied to remove any possible surface contamination during the etching process. The sample may also be rinsed with isopropanol and blow-dried, and once more fixed on a silicon wafer.

Next, as depicted in Figure 12I, a layer 13 of non-electrically active material is spin coated onto the sample. Photolithography may be used as described with reference to Figure 12D to limit the layer 13 to regions closely surrounding the $\mu$SVs 12.

Should the diamond substrate 41 be fixed to a silicon wafer, the photoresist used to this end is removed from the edges of the diamond substrate 41 with acetone to detach the sample. The sample is then hard baked in order to cure the layer 13.

Once the resist layer 13 is cured, shallow Ar/O2 plasma etching is used to remove the layer 13 which may lie on top of the end faces of the $\mu$SVs 12.

In the next step illustrated in Figure 12J, electrical contacts comprising electrodes 15, 16 and contact pads 20, 21, 42 are patterned on the top side of the of the layer 13 and of the $\mu$SVs 12, following the method described with reference to Figure 4K.

Finally, the obtained multi-layer diamond sensor 40 should be rinsed with isopropanol and blow-dried.

The sensor 40 is then ready for mounting onto an appropriate sensor carrier and for wire bonding as shown in Figure 12K.

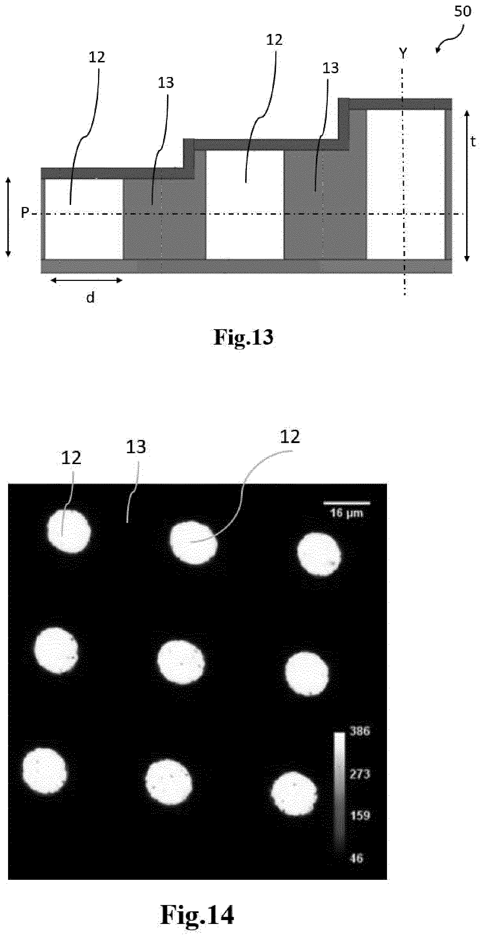

Figure 13 illustrates a further embodiment of a sensor 50 according to the invention. As depicted, the micro-sensitive volumes 12 may form several subsets of respective different thicknesses. Each subset may have $\mu$SVs 12 all having a same thickness and interconnected by a same top electrode or by a plurality of top electrodes. One subset may have $\mu$SVs 12 having a thickness that differs by at least 30% from the thickness of another subset.

The number of $\mu$SVs 12 may be the same for each subset or may be different.

Figure 14 illustrates the response of a sensor according to the invention to a raster scan with a +20 V bias voltage and a 3 MeV alpha particle beam. As shown by the image, the non-electrically active material 13 does not produce any measurable signal, contrary to the $\mu$SVs 12.

The invention is not limited to the examples described above; notably, features of the illustrated examples may be combined with one another in variants which have not been illustrated.

The doped layer may be a n type, instead of p type, and be a p, p+, n or n+ doped layer.

The non-electrically active material may be a material other than an epoxy-based resist, for example any other appropriate any hard-baked stable resist or polymer, such as PMMA, or an inorganic material, such as glass.

The top electrodes may be deposited so as to be connected each to only one respective $\mu$SV 12 instead of a respective array of $\mu$SVs 12 as in the examples described above.

**Claims**

1. A sensor (10; 30; 40; 50) comprising:

   - a plurality of isolated, single-standing diamond-based micro-sensitive volumes (12) having opposite end faces (12a, 12b),
   - a layer (13) of a non-electrically active material extending around each micro-sensitive volume (12) of said plurality,
   - electrodes (15, 16; 17; 19) electrically connected to said end faces of said plurality for signal readout.

2. The sensor of claim 1, comprising a diamond-based frame (11) supporting said non-electrically active layer (13), preferably an intrinsic diamond layer, more preferably an intrinsic scCVD diamond layer.

3. The sensor of claim 2, comprising electrode bonding pads (20, 21) in contact with said frame.

4. The sensor of any one of claims 2 or 3, comprising a common electrode (19) extending over the end faces (12b) adjacent the diamond-based frame (11).

5. The sensor according to claim 1, comprising a diamond-based substrate (41) over which the plurality of micro-sensitive volumes (12) extends.

6. The sensor of any one of the preceding claims, comprising a doped diamond layer (17) in contact with end faces (12b) of the plurality of micro-sensitive volumes (12).

7. The sensor of claim 6 and any one of claims 2 to 4, the doped layer (17) extending over the end faces (12b) that are adjacent the diamond-based frame (11).

8. The sensor of claims 5 and 6, the doped layer (17) extending between the plurality of micro-sensitive volumes (12) and said substrate (41) and over said substrate (41) on a first area (41a) thereof, electrode bonding pads (20, 21; 42) being located respectively on said doped layer (17) over said first area (41a) and on the substrate on a second area (41b) thereof opposite the first one (41a) with respect to the micro-sensitive volumes (12).

9. The sensor according to any one of claims 6 to 8, the doped layer (17) being a boron p+ doped layer or doped layer being a phosphorus n+ doped layer.

10. The sensor according to any one of the preceding claims, the diamond-based micro-sensitive volumes (12) being made of intrinsic diamond, preferably single crystal diamond, more preferably CVD diamond.

11. The sensor according to any one of the preceding claims, the micro-sensitive volumes (12) having a thickness (t) in a direction perpendicular to a plane (P) defined by the non-electrically active layer (13) smaller than 100 μm, the micro-sensitive volumes (12) preferably having a cylindrical shape with an axis (Y) perpendicular to said plane (P) and with a diameter (d) ranging from 10 μm to 100 μm.

12. The sensor according to any one of the preceding claims, the plurality of micro-sensitive volumes (12) having at least two different thicknesses (t) in a direction perpendicular to a plane (P) defined by the non-electrically active layer (13).

13. A method for manufacturing a sensor as defined in any one of claims 1 to 12, comprising;

    - formation of a diamond-based membrane (26),
    - formation a doped diamond layer (17) on a bottom side of the diamond-based membrane (26),
    - formation of diamond-based micro-sensitive volumes (12) supported by the doped diamond layer (17) by selective etching of the membrane (26) over the entirety of its thickness,
    - deposition of a layer (13) of non-electrically active material around the micro-sensitive volumes (12).

14. A method for manufacturing a sensor as defined in any one of claims 1 to 12, comprising:

    - formation of a diamond-based membrane (26),
    - formation of diamond-based micro-protrusions supported by a residual layer of the membrane (26) by selective etching of the membrane over a part of its thickness,
    - deposition of a layer (13) of non-electrically active material around the micro-protrusions on the residual layer,
    - removing the residual layer by etching said residual layer to form the micro-sensitive volumes (12) supported by the layer of non-electrically active material (13).

15. A method for manufacturing a sensor as defined in any one of claims 1 to 12, comprising:

    - formation of a doped diamond layer (17) over a substrate (41),
    - formation of a diamond-based layer (43) over the doped layer (17),
    - formation of diamond based micro-sensitive volumes (12) over the doped layer (17) by selective etching of the diamond-based layer (43) over the entirety of its thickness,
    - optionally, selective etching of the doped layer (17) to leave an exposed region on the substrate on one side of the micro-sensitive volumes,
    - deposition of a layer (13) of non-electrically active material around the micro-sensitive volumes (12).

**Patentansprüche**

1. Sensor (10; 30; 40; 50) umfassend:

    - eine Vielzahl von isolierten einzelstehenden mikroempfindlichen Volumen auf Diamantbasis (12) mit gegenüberliegenden Endflächen (12a, 12b),
    - eine Schicht (13) aus einem nicht elektrisch aktiven Material, die sich um jedes mikroempfindliche Volumen (12) aus der Vielzahl erstreckt,
    - Elektroden (15, 16; 17; 19), die elektrisch mit den Endflächen der Vielzahl verbunden sind, zur Signalauslesung.

2.  Sensor nach Anspruch 1, umfassend einen Rahmen auf Diamantbasis (11), der die nicht elektrisch aktive Schicht (13) trägt, vorzugsweise eine intrinsische Diamantschicht, bevorzugter eine intrinsische scCVD-Diamantschicht.

3.  Sensor nach Anspruch 2 umfassend Elektroden-Bondpads (20, 21) in Kontakt mit dem Rahmen.

4.  Sensor nach einem der Ansprüche 2 oder 3, umfassend eine gemeinsame Elektrode (19), die sich über die Endflächen (12b) benachbart zu dem Rahmen auf Diamantbasis (11) erstreckt.

5.  Sensor nach Anspruch 1 umfassend ein Substrat auf Diamantbasis (41), über das sich die Vielzahl von mikroempfindlichen Volumen (12) erstreckt.

6.  Sensor nach einem der vorstehenden Ansprüche, umfassend eine dotierte Diamantschicht (17) in Kontakt mit Endflächen (12b) der Vielzahl von mikroempfindlichen Volumen (12).

7.  Sensor nach Anspruch 6 und einem der Ansprüche 2 bis 4, wobei sich die dotierte Schicht (17) über die Endflächen (12b) erstreckt, die zu dem Rahmen auf Diamantbasis (11) benachbart sind.

8.  Sensor nach Ansprüchen 5 und 6, wobei sich die dotierte Schicht (17) zwischen der Vielzahl von mikroempfindlichen Volumen (12) und dem Substrat (41) und über das Substrat (41) auf einem ersten Bereich (41a) davon erstreckt, wobei Elektroden-Bondpads (20, 21; 42) jeweils auf der dotierten Schicht (17) über dem ersten Bereich (41a) und auf dem Substrat auf einem zweiten Bereich (41b) davon gegenüber dem ersten (41a) bezogen auf die mikroempfindlichen Volumen (12) angeordnet sind.

9.  Sensor nach einem der Ansprüche 6 bis 8, wobei die dotierte Schicht (17) eine Bor-p+-dotierte Schicht ist oder die dotierte Schicht eine Phosphor-n+-dotierte Schicht ist.

10. Sensor nach einem der vorstehenden Ansprüche, wobei die mikroempfindlichen Volumen auf Diamantbasis (12) aus intrinsischem Diamant, vorzugsweise einkristallinem Diamant, bevorzugter CVD-Diamant, hergestellt sind.

11. Sensor nach einem der vorstehenden Ansprüche, wobei die mikroempfindlichen Volumen (12) eine Dicke (t) in einer Richtung senkrecht zu einer Ebene (P), die durch die nicht elektrisch aktive Schicht (13) definiert ist, von kleiner als 100 μm aufweisen, wobei die mikroempfindlichen Volumen (12) vorzugsweise eine zylindrische Form mit einer Achse (Y) senkrecht zu der Ebene (P) und mit einem Durchmesser (d) in dem Bereich von 10 μm bis 100 μm aufweisen.

12. Sensor nach einem der vorstehenden Ansprüche, wobei die Vielzahl von mikroempfindlichen Volumen (12) wenigstens zwei verschiedene Dicken (t) in einer Richtung senkrecht zu einer von der nicht elektrisch aktiven Schicht (13) definierten Ebene (P) aufweisen.

13. Verfahren zur Herstellung eines Sensors nach einem der Ansprüche 1 bis 12, umfassend;

    - Bilden einer Membran auf Diamantbasis (26),
    - Bilden einer dotierten Diamantschicht (17) auf einer Unterseite der Membran auf Diamantbasis (26),
    - Bilden von mikroempfindlichen Volumen auf Diamantbasis (12), die von der dotierten Diamantschicht (17) getragen werden, durch selektives Ätzen der Membran (26) über ihre gesamte Dicke,
    - Abscheiden einer Schicht (13) aus nicht elektrisch aktivem Material um die mikroempfindlichen Volumen (12).

14. Verfahren zur Herstellung eines Sensors nach einem der Ansprüche 1 bis 12, umfassend:

    - Bilden einer Membran auf Diamantbasis (26),
    - Bilden von Mikrovorsprüngen auf Diamantbasis, die von einer Restschicht der Membran (26) getragen werden, durch selektives Ätzen der Membran über einen Teil ihrer Dicke,
    - Abscheiden einer Schicht (13) aus nicht elektrisch aktivem Material um die Mikrovorsprünge auf der Restschicht,
    - Entfernen der Restschicht durch Ätzen der Restschicht, um die mikroempfindlichen Volumen (12) zu bilden, die von der Schicht aus nicht elektrisch aktivem Material (13) getragen werden.

15. Verfahren zur Herstellung eines Sensors nach einem der Ansprüche 1 bis 12, umfassend:

    - Bilden einer dotierten Diamantschicht (17) über einem Substrat (41),
    - Bilden einer Schicht auf Diamantbasis (43) über der dotierten Schicht (17),
    - Bilden von mikroempfindlichen Volumen auf Diamantbasis (12) über der dotierten Schicht (17) durch selektives Ätzen der Schicht auf Diamantbasis (43) über ihre gesamte Dicke,
    - gegebenenfalls selektives Ätzen der dotierten Schicht (17), um einen freigelegten Bereich auf dem Substrat auf einer Seite der mikroempfindlichen Volumen zu belassen,
- Abscheiden einer Schicht (13) aus nicht elektrisch aktivem Material um die mikroempfindlichen Volumen (12).

**Revendications**

1. Capteur (10 ; 30 ; 40 ; 50) comprenant :

   - une pluralité de microvolumes sensibles à base de diamant isolés, individuels (12) ayant des faces d'extrémité opposées (12a, 12b),
   - une couche (13) d'un matériau électriquement inactif s'étendant autour de chaque microvolume sensible (12) de ladite pluralité,
   - des électrodes (15, 16 ; 17 ; 19) reliées électriquement auxdites faces d'extrémité de ladite pluralité pour la lecture de signaux.

2. Capteur selon la revendication 1, comprenant un cadre à base de diamant (11) soutenant ladite couche électriquement inactive (13), de préférence une couche de diamant intrinsèque, mieux encore une couche de diamant intrinsèque scCVD.

3. Capteur selon la revendication 2, comprenant des plots de connexion d'électrode (20, 21) en contact avec ledit cadre.

4. Capteur selon l'une quelconque des revendications 2 et 3, comprenant une électrode commune (19) s'étendant par-dessus les faces d'extrémité (12b) adjacentes au cadre à base de diamant (11).

5. Capteur selon la revendication 1, comprenant un substrat à base de diamant (41) par-dessus lequel s'étend la pluralité de microvolumes sensibles (12).

6. Capteur selon l'une quelconque des revendications précédentes, comprenant une couche de diamant dopé (17) en contact avec des faces d'extrémité (12b) de la pluralité de microvolumes sensibles (12).

7. Capteur selon la revendication 6 et l'une quelconque des revendications 2 à 4, la couche dopée (17) s'étendant par-dessus les faces d'extrémité (12b) qui sont adjacentes au cadre à base de diamant (11).

8. Capteur selon les revendications 5 et 6, la couche dopée (17) s'étendant entre la pluralité de microvolumes sensibles (12) et ledit substrat (41) et par-dessus ledit substrat (41) sur une première zone (41a) de celui-ci, des plots de connexion d'électrode (20, 21 ; 42) se situant respectivement sur ladite couche dopée (17) par-dessus ladite première zone (41a) et sur le substrat sur une deuxième zone (41b) de celui-ci à l'opposé de la première (41a) par rapport aux microvolumes sensibles (12).

9. Capteur selon l'une quelconque des revendications 6 à 8, la couche dopée (17) étant une couche dopée au bore p+ ou bien la couche dopée étant une couche dopée au phosphore n+.

10. Capteur selon l'une quelconque des revendications précédentes, les microvolumes sensibles à base de diamant (12) étant faits de diamant intrinsèque, de préférence de diamant monocristallin, mieux encore de diamant CVD.

11. Capteur selon l'une quelconque des revendications précédentes, les microvolumes sensibles (12) ayant une épaisseur (t) dans une direction perpendiculaire à un plan (P) défini par la couche électriquement inactive (13) inférieure à 100 $\mu$m, les microvolumes sensibles (12) ayant de préférence une forme cylindrique avec un axe (Y) perpendiculaire audit plan (P) et avec un diamètre (d) allant de 10 $\mu$m à 100 $\mu$m.

12. Capteur selon l'une quelconque des revendications précédentes, la pluralité de microvolumes sensibles (12) ayant au moins deux épaisseurs différentes (t) dans une direction perpendiculaire à un plan (P) défini par la couche électriquement inactive (13).

13. Procédé destiné à fabriquer un capteur tel que défini dans l'une quelconque des revendications 1 à 12, comprenant :

    - la formation d'une membrane à base de diamant (26),
    - la formation d'une couche de diamant dopé (17) sur un côté inférieur de la membrane à base de diamant (26),
    - la formation de microvolumes sensibles à base de diamant (12) soutenus par la couche de diamant dopé (17) par gravure sélective de la membrane (26) sur la totalité de son épaisseur,
    - le dépôt d'une couche (13) de matériau électriquement inactif autour des microvolumes sensibles (12).

14. Procédé destiné à fabriquer un capteur tel que défini dans l'une quelconque des revendications 1 à 12, comprenant :

    - la formation d'une membrane à base de diamant (26),
    - la formation de microsaillies à base de diamant soutenues par une couche résiduelle de la membrane (26) par gravure sélective de la membrane sur une partie de son épaisseur,
    - le dépôt d'une couche (13) de matériau électriquement inactif autour des microsaillies sur la couche résiduelle,

- le retrait de la couche résiduelle par gravure de ladite couche résiduelle pour former les microvolumes sensibles (12) soutenus par la couche de matériau électriquement inactif (13).

15. Procédé destiné à fabriquer un capteur tel que défini dans l'une quelconque des revendications 1 à 12, comprenant :

    - la formation d'une couche de diamant dopé (17) sur un substrat (41),
    - la formation d'une couche à base de diamant (43) par-dessus la couche dopée (17),
    - la formation de microvolumes sensibles à base de diamant (12) par-dessus la couche dopée (17) par gravure sélective de la couche à base de diamant (43) sur la totalité de son épaisseur,
    - éventuellement, la gravure sélective de la couche dopée (17) pour laisser une région exposée sur le substrat sur un côté des microvolumes sensibles,
    - le dépôt d'une couche (13) de matériau électriquement inactif autour des microvolumes sensibles (12) .

**Fig.1**

**Fig.2**

**Fig.3**

**Fig.4A**

**Fig.4B**

**Fig.4C**

**Fig.4D**

**Fig.4E**

**Fig.4F**

**Fig.4G**

**Fig.4H**

**Fig.4I**

**Fig.4J**

**Fig.4K**

**Fig.4L**

**Fig.5**

**Fig.6**

**Fig.7**

**Fig.8A**          **Fig.8B**          **Fig.8C**

**Fig.8D**

**Fig.8E**

**Fig.8F**

**Fig.8G**

**Fig.8H**

**Fig.8I**

**Fig.9**

Fig.10

Fig.11

Fig.12A

Fig.12B

Fig.12C

**Fig.12D**

**Fig.12E**

**Fig.12F**

**Fig.12G**

**Fig.12H**

**Fig.12I**

**Fig.12J**

**Fig.12K**

Fig.13

Fig.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• FR 3066831 A1

**Non-patent literature cited in the description**

• **C. VERONA**. Toward the use of single crystal diamond-based detector for ion-beam therapy micro-dosimetry,. *Radiation Measurements*, 2018, vol. 110, 25-31

• **J. DAVIS et al.** A 3D lateral electrode structure for diamond based microdosimeter. *Applied Physics Letter*, 2017, vol. 110

• **J. DAVIS et al.** Evolution of Diamond based Microdosimetry,Micro-Mini & Nano Dosimetry (MMND) 2018. *IOP Conf. Series: Journal of Physics: Conf. Series*, 2019, 1154

• **I. A. ZAHRADNIK et al.** scCVD diamond membrane based microdosimeter for hadron therapy,. *Phys. Status Solidi A*, 2018, vol. 215, 1800383

• **I. A. ZAHRADNIK et al.** A diamond guard ring microdosimeter for ion beam therapy. *Rev. Sci. Instrum.*, 2020, vol. 91, 054102

• **DAVIS et al.** Characterization of an alternative diamond based microdosimeter prototype. *IEEE Transactions on nuclear science*, 01 December 2014, vol. 61 (6)

• **VOHRADSKY et al.** *Study in the feasibility of silicon and diamond microsimetry use in boron neutron capture therapy*, 08 May 2017

• **M. POMORSKI et al.** Super-thin single crystal diamond membrane radiation detectors,. *Appl. Phys. Lett.*, 2013, vol. 103, 112106